(19) **Europäisches Patentamt**

**European Patent Office**

**Office européen des brevets**

(11) Veröffentlichungsnummer: **0 143 283**
**B1**

(12) **EUROPÄISCHE PATENTSCHRIFT**

(45) Veröffentlichungstag der Patentschrift:
**25.01.89**

(21) Anmeldenummer: **84112006.6**

(22) Anmeldetag: **06.10.84**

(51) Int. Cl.⁴: **B 62 B 15/00**, B 63 B 35/82

(54) **Fahrgerät mit einer Trittfläche.**

(30) Priorität: **27.10.83 DE 3338946**
**27.10.83 DE 8330835 U**

(43) Veröffentlichungstag der Anmeldung:
**05.06.85 Patentblatt 85/23**

(45) Bekanntmachung des Hinweises auf die Patenterteilung:
**25.01.89 Patentblatt 89/4**

(84) Benannte Vertragsstaaten:
**AT BE CH DE FR GB IT LI LU NL SE**

(56) Entgegenhaltungen:
**EP-A-0 060 043**
**DE-A-2 738 141**
**FR-A-2 312 404**
**FR-A-2 403 920**
**FR-A-2 411 117**

(73) Patentinhaber: **Rougé, Anthony, Boysenstrasse 1,**
**D-3200 Hildesheim (DE)**

(72) Erfinder: **Rougé, Anthony, Boysenstrasse 1, D-3200**
**Hildesheim (DE)**
Erfinder: **Schulze, Joachim, Am Kuckucksberg 44,**
**D-3207 Harsum- Asel (DE)**

(74) Vertreter: **Thömen, Uwe, Dipl.- Ing., Patentanwalt**
**U. Thömen Zeppelinstrasse 5, D-3000 Hannover 1**
**(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein mit Windenergie durch Segel antreibbares Fahrgerät gemäß dem Oberbegriff des Patentanspruchs 1.

Es sind schon seit längerer Zeit die Surfbretter bekannt, welche mit Windenergie angetrieben werden. Zu diesem Zweck ist auf dem eigentlichen Surfbrett ein Mast gelenkig angeordnet, welcher ein Segel trägt. An dem Mast befindet sich ein Gabelbaum, an welchem sich der auf dem Surfbrett stehende Benutzer festhalten und die Segelstellung verändern kann.

Der Anwendungsbereich dieser Surfbretter ist allerdings dadurch eingeschränkt, daß sie ausschließlich auf Gewässern benutzt werden können. Um das bekannte Prinzip des Antriebs durch Windenergie mittels eines Segels auch zu Lande nutzbar zu machen, sind schon sogenannte Strandsegler gebaut worden.

Der Strandsegler besitzt - einem Dreirad vergleichbar - zwei Vorderräder und ein Hinterrad. Die Räder tragen eine aufwendige Rahmenkonstruktion, welche ein Aufnahmeteil für den Benutzer umfaßt, der allerdings nicht steht, sondern sitzt. Der Strandsegler ist daher weniger mit einem Surfbrett als vielmehr mit einem Segelboot zu vergleichen.

Man könnte übrigens auch daran denken, bei einem Fahrgerät nach Art eines Surfbrettes eine Trittfläche zu verwenden, die vorne und hinten jeweils mit einer Achse verbunden ist, von denen jede zwei Räder besitzt. An die Trittfläche eines solchen Rollsurfers könnte ein Mast mit einem Gabelbaum angelenkt werden, so daß im Prinzip auf dem Lande eine Verwendung wie ein im Wasser benutztes Surfbrett möglich wäre.

Die beschriebenen Lösungen sind in der praktischen Anwendung allerdings mit erheblichen Nachteilen behaftet. Diese sind darauf zurückzuführen, daß sich die Art der Richtungsänderung bzw. Lenkung eines Wasserfahrzeuges naturgemäß grundsätzlich von der Lenkung eines Landfahrzeuges unterscheidet.

Während bei einem im Wasser eingesetzten Surfbrett eine Richtungsänderung in einfacher Weise durch unterschiedliche Segelstellungen erreicht werden kann, ist bei mit Rädern versehenen Landfahrzeugen grundsätzlich eine gesonderte Lenkung erforderlich. Zu diesem Zweck können - wie bei Kraftfahrzeugen üblich - die Vorderräder lenkbar sein, oder alternativ kann die komplette Achse mit nicht lenkbaren Rädern relativ zur Fahrtrichtung verschwenkbar sein.

Bei dem voranstehend erwähnten Strandsegler erfolgt die notwendige Lenkung dadurch, daß die Vorderachse oder auch die Vorderräder mit Stangen oder Seilen verbunden sind, welche der Benutzer bedienen muß. Zusätzlich ist aber auch noch die Bedienung des Segels erforderlich, so daß die Handhabung eines solchen Strandseglers sehr schwierig wird. Der Benutzer muß im wahrsten Sinne des Wortes mit Händen und Füßen arbeiten. Außerdem bringt der erforderliche Lenkmechanismus einen die Herstellung und Pflege verteuernden Aufwand mit sich.

Die beschriebene Lenkung des Strandseglers kann bei dem oben genannten Rollsurfer nicht verwendet werden. Die auf der schmalen Trittfläche stehende Person muß sich mit den Händen am Gabelbaum festhalten und ist daher nicht in der Lage, zusätzliche Gestänge oder Zugseile für die Lenkung zu bedienen. Bei Verzicht auf eine Lenkung des Rollsurfers ergibt sich aber in nachteiliger Weise eine starke Einschränkung der Benutzung.

Der Rollsurfer läßt sich nämlich wegen der starren Räder lediglich längs einer geraden Strecke verwenden. Bei einer gewünschten Richtungsänderung muß der Rollsurfer angehalten und in die neue gewünschte Fahrtrichtung ausgerichtet werden. Zu dieser umständlichen Handhabung kommt noch hinzu, daß auch gerade Strecken nicht beliebig lang befahren werden können, da auf Grund der sich möglicherweise ändernden Windrichtung häufig Richtungsänderungen "vorgeschrieben" werden.

Insgesamt stehen also der zunehmenden Bedeutung und Beliebtheit der Rollsurfer als Freizeitsportgerät erhebliche Nachteile entgegen.

Durch die Druckschrift FR-A-2 411 117, von der die Erfindung ausgeht, ist auch schon ein mit Windenergie durch Segel antreibbares Fahrgerät mit einer Trittfläche bekannt, welches zur Erzielung von Richtungsänderungen eine Lenkung dadurch ermöglicht, daß die Trittfläche aus ihrer normalerweise waagerechten Lage heraus durch Gewichtsverlagerung einer Person in eine Schrägstellung bringbar ist.

Das bekannte Fahrgerät besitzt eine Doppellenkachse mit zwei Rädern, und die Trittfläche ist mittels einer Lenkvorrichtung in der Weise mit der Doppellenkachse verbunden, daß diese aus ihrer Ruhelage ausgelenkt wird, wenn die Trittfläche aus ihrer waagerechten Lage heraus in eine Schrägstellung gebracht wird.

Der bekannte Lenkmechanismus arbeitet nach dem Prinzip von Skate-Boards unter Verwendung von Gummiblöcken, die als Puffer und als nachgiebige verformbare Teile der Lenkung dienen. Die Auslenkung der betreffenden Doppellenkachse durch eine Schrägstellung der Trittfläche ist dabei ausschließlich auf die Elastizität des Gummiblockes zurückzuführen, so daß der Ausschlag der Lenkung bzw. die Größe einer gewünschten Richtungsänderung nur in einem begrenzten Maß möglich ist, nämlich nur insoweit, als die Elastizität des Gummiblockes eine Verformung erlaubt.

Da der Gummiblock entgegen einer elastischen Kraft zusammengedrückt werden muß, um eine Lenkung zu bewirken, wobei der Gummiblock das Bestreben hat, in die neutrale Ausgangslage zurückzukehren, ist es erforderlich, bei einer gewünschten Lenkung die Trittfläche unter Kraftaufwand in einer Schrägstellung zu halten. Aufgrund der Rückstellkräfte des Gummiblockes ist die Trittfläche nämlich bestrebt, ihre neutrale waagerechte Lage einzunehmen, was einer Fahrt in gerader Richtung entspricht.

Der beschriebene Umstand wirkt sich in der Praxis ungünstig auf das Fahrverhalten des Fahrgerätes aus. Der Benutzer ist nämlich während der Lenkbewegung gezwungen, die Trittfläche über die gesamte Dauer der Lenkbewegung in einer Neigung zu halten und sein Gewicht entsprechend zu verlagern, und zwar entgegen der Rückstellkraft des Gummiblockes. Andernfalls gelangt die Trittfläche aufgrund der Rückstellkräfte des Gummiblockes automatisch in die waagerechte Lage, so daß die Lenkbewegung in eine Geradeausfahrt übergeht.

Ferner ist durch das Dokument EP-A-0 064 360 ebenfalls ein nach Art von Rollschuhen ausgebildetes Fahrgerät bekannt, welches eine Trittfläche besitzt, die mit einem Einradlenkkopf für ein einzelnes Rad verbunden ist. Durch Verschwenken der Trittfläche läßt sich ebenfalls eine Lenkung des genannten Rades erzielen.

Der Lenkmechanismus umfaßt eine schräg zur Fahrtrichtung verlaufende Drehachse sowie zwei sich zu beiden Seiten des mittig angeordneten Rades nach Art einer Gabel bei dem Lenker eines Fahrrades erstreckende Teile. Bei Verwendung dieses bekannten Fahrgerätes reagiert die Lenkung sehr empfindlich auf Verschwenkungen der Trittfläche, weil keinerlei Dämpfungsglieder vorgesehen sind und sich Gewichtsverlagerungen sofort auf die Lenkung übertragen. Dies wirkt sich insbesondere bei einer Fahrt über unebenes Gelände nachteilig aus, weil dann sehr leicht ungewollte Lenkbewegungen auftreten und die Lenkung ausschlägt.

Der Erfindung liegt die Aufgabe zugrunde, ein mit Windenergie durch Segel antreibbares Fahrgerät gemäß dem Oberbegriff des Anspruchs 1 zu schaffen, welches bei einfacher Handhabung eine sichere Lenkung ohne wesentliche Einschränkung des Lenkausschlages auch bei unebenem Gelände und unter Vermeidung von Rückstellkräften ermöglicht.

Dieses Ziel erreicht die Erfindung durch die im kennzeichnenden Teil des Patentanspruchs 1 angegebenen Merkmale.

Von Bedeutung sind die Verwendung eines Lenkkopfes für zwei Bewegungsmittel, die durch im Abstand voneinander befindliche Buchsen gebildete schräg zur Fahrtrichtung verlaufende Fluchtlinie, wobei die Doppellenkachse räumlich vor der Fluchtlinie liegt, sowie die Verwendung von gelenkig angeordneten Dämpfungsgliedern zwischen der Doppellenkachse und der Trittfläche.

Die spezielle Lenkgeometrie ermöglicht eine problemlose Lenkung des Fahrgerätes durch Gewichtsverlagerung der auf der Trittfläche stehenden Person. Die Dämpfungsglieder weisen im stationären Zustand eines Lenkausschlags keine Rückstellkräfte auf, so daß sich die gewünschte Auslenkung auch bei unebenem Gelände einfach durch Gewichtsverlagerung realisieren läßt. Dabei entspricht die Erzeugung der Lenkung dem natürlichen Empfinden des Benutzers, der beispielsweise dazu neigt, bei einer Rechtskurve sein Körpergewicht auch nach rechts hin zu verlagern. Da die Lenkung lediglich durch Gewichtsverlagerung herbeigeführt wird, ist der Benutzer in seiner eigentlichen und wesentlichen Bedienung des für den Antrieb durch Windenergie erforderlichen Segels nicht behindert.

In zweckmäßiger Ausgestaltung der Erfindung ist die Neigung der Fluchtlinie bzw. des Achslenkzapfens veränderbar. Zwischen dem Wert der Auslenkung der Trittfläche aus der waagerechten Lage heraus und dem Maß der dadurch hervorgerufenen Auslenkung besteht nämlich ein direkter Zusammenhang, wobei die Auslenkung von der Neigung der Fluchtlinie bzw. des Achslenkzapfens abhängt.

Durch die Möglichkeit, die Neigung der Fluchtlinie zu verändern, besteht die Möglichkeit, eine Anpassung des Fahrgerätes an das Können und an die Fertigkeit des jeweiligen Benutzers herbeizuführen. Bei einem Anfänger empfiehlt es sich beispielsweise, die Neigung so auszurichten, daß Lageveränderungen der Trittfläche aus der waagerechten Lage heraus nur zu geringfügigen Lenkbewegungen führen.

Das neue Fahrgerät kann an den beiden äußeren Enden der Doppellenkachse mit je einem Rad versehen sein, und außerdem ist es zweckmäßig, am hinteren Ende der Trittfläche ein Einzelrad vorzusehen. Diese Anordnung läßt sich bei normalen Bodenverhältnissen auf dem Lande verwenden. Allerdings ist es auch möglich, das Fahrgerät auf Schnee oder auf Eisflächen zu benutzen, denn in zweckmäßiger Ausgestaltung der Erfindung ist vorgesehen, die Bewegungsmittel auch in Form von Kufen (wie bei Schlittschuhen üblich) oder in Form von Skier auszubilden.

Zum besseren Verständnis wird die Erfindung nachfolgend anhand der in der Zeichnung dargestellten Ausführungsbeispiele näher erläutert.

Es zeigen:

Fig. 1 und 2 zwei Ansichten eines ersten Ausführungsbeispiels eines Fahrgerätes,
Fig. 3 und 4 zwei weitere Ansichten eines anderen Ausführungsbeispiels des neuen Fahrgeräts,
Fig. 5 und 6 zwei Ansichten eines dritten Ausführungsbeispiels eines neuen Fahrgeräts,
Fig. 7 eine Ansicht - vom Boden aus gesehen - der gelenkartigen Verbindung,
Fig. 8 eine Seitenansicht der Verbindung gemäß Fig. 7,
Fig. 9 einen Lenkkopf in einer Seitenansicht,
Fig. 10 eine weitere Seitenansicht eines Lenkkopfes,
Fig. 11 eine Draufsicht auf die Verbindung gemäß Fig. 10,
Fig. 12 eine Prinzipdarstellung zur Erläuterung der mit der Erfindung erzielbaren Lenkung, und

Fig. 13 ein weiteres Ausführungsbeispiel eines neuen Fahrgerätes mit einer Bremsvorrichtung.

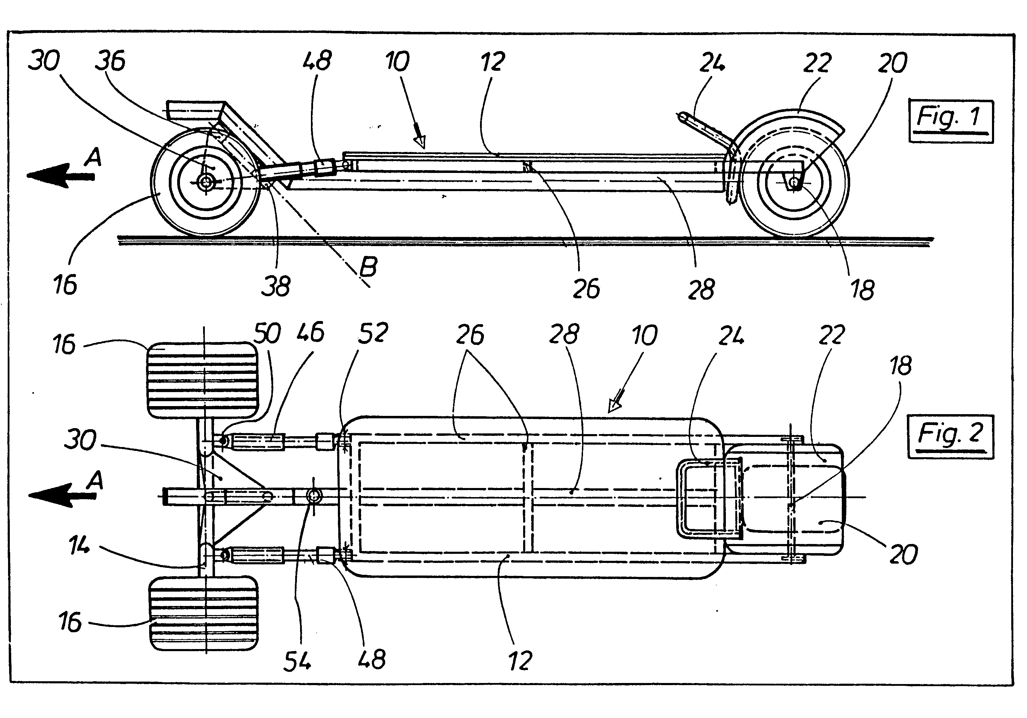

In den Fig. 1 - 6 sind drei Ausführungsbeispiele eines Fahrgerätes 10 dargestellt, wobei einander entsprechende Teile mit gleichen Bezugszeichen versehen sind. Jedes Ausführungsbeispiel eines Fahrgerätes 10 ist jeweils in einer Seitenansicht und in einer Draufsicht gezeigt.

Neben der weiter unten noch näher erläuterten Lenkung besitzt das Fahrgerät 10 als wesentliche Bestandteile eine Trittfläche 12, die sowohl mit einer Doppellenkachse 14 als auch mit einer Hinterachse 18 in Verbindung steht. Letztere trägt ein Hinterrad 20, während an der Vorderachse 14 zwei Vorderräder 16 vorgesehen sind, so daß man das Fahrgerät - nachfolgend als Rollsurfer 10 bezeichnet - zu Lande bewegen kann.

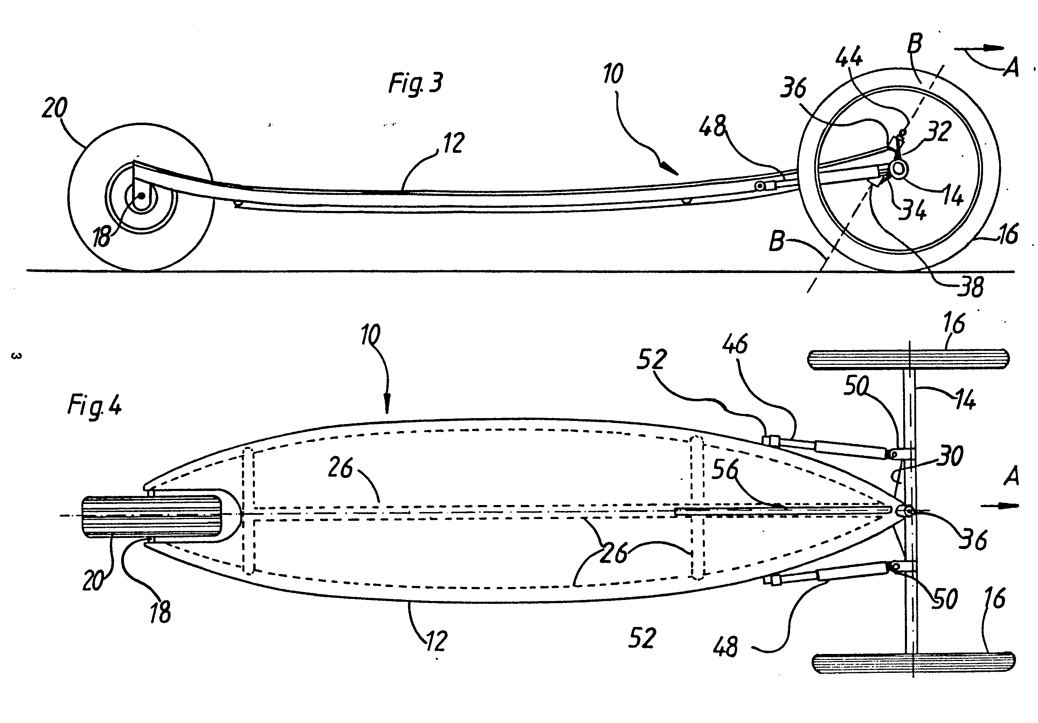

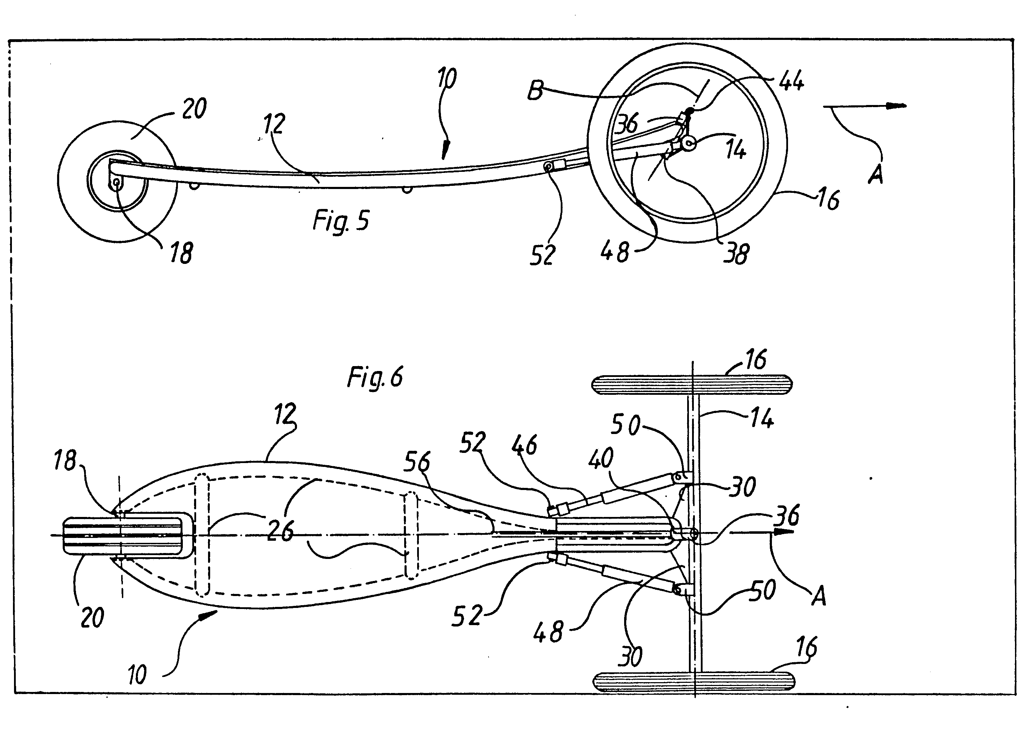

Für den Antrieb durch Windenergie ist der Rollsurfer mit einem Rigg (Mast und Gabelbaum für ein Segel) versehen, welches in der Zeichnung aus Gründen der Übersichtlichkeit nicht dargestellt ist. In Fig. 6 ist allerdings eine Mastschiene 56 zu erkennen, welche mit einem Aufnahmeteil für die gelenkige Verbindung des Mastes versehen werden kann. Auch in Fig. 2 ist in der Draufsicht ein Verbindungselement 54 für die Befestigung eines Mastes angedeutet, welches eine Bewegung des Rollsurfers 10 wie bei einem bekannten Surfbrett mittels Windenergie erlaubt.

Für die Trittfläche 12 des Rollsurfers 10 sind unterschiedliche Formen denkbar. In den Fig. 1 und 2 besitzt die Trittfläche eine etwa rechteckförmige Gestalt, während sie in Fig. 4 und 6 nach vorne und hinten schmal zulaufend ausgebildet ist. Außerdem verläuft die Trittfläche 12 in den Fig. 3 und 5 nicht waagerecht sondern leicht kurvenförmig.

In allen Fällen wird die Trittfläche 12 zur Erzielung einer mechanischen Stabilität durch einen Tragrahmen 26 mit einer mittigen Tragschiene 28 gestützt bzw. getragen.

An dem Tragrahmen 26 ist auch die Hinterachse 18 befestigt. Die Trittfläche 12 selbst kann beispielsweise aus Holz bestehen, auf welches oben gegebenenfalls ein rutschfester Gummibelag aufgebracht ist.

Der Rollsurfer gemäß Fig. 1 und 2 besitzt für das Hinterrad 20 noch ein Schutzblech 22, und außerdem ist bei dieser Ausführungsform noch ein beweglich an dem Tragrahmen 26 befestigter Bremshebel 24 vorgesehen, dessen unterer Teil bei Betätigung gegen das Hinterrad 20 drückt, um somit eine durch Reibung hervorgerufene Bremsung zu bewirken.

Der entscheidende Bestandteil des Rollsurfers 10, dessen Fahrtrichtung in der Zeichnung jeweils durch einen Pfeil A angedeutet ist, besteht in einem Lenkmechanismus, welcher eine Lenkung des Rollsurfers 10 durch ein Verschwenken der Doppellenkachse 14 aus ihrer Normallage heraus - in dieser Lage bilden die Doppellenkachse 14 und die mittlere Tragschiene 28 miteinander einen rechten Winkel - ermöglicht.

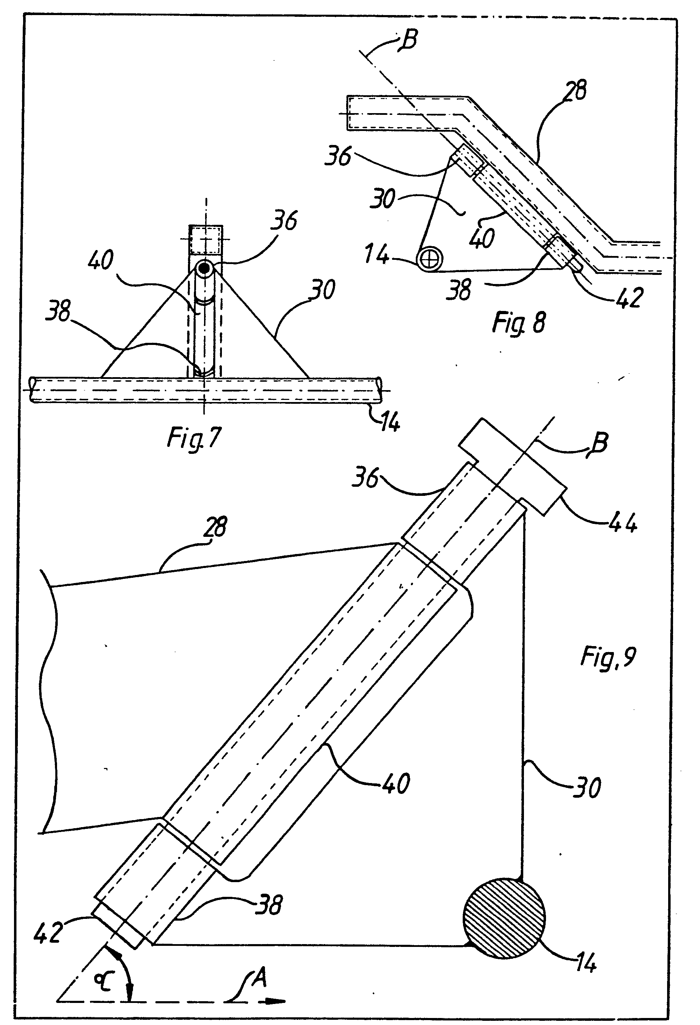

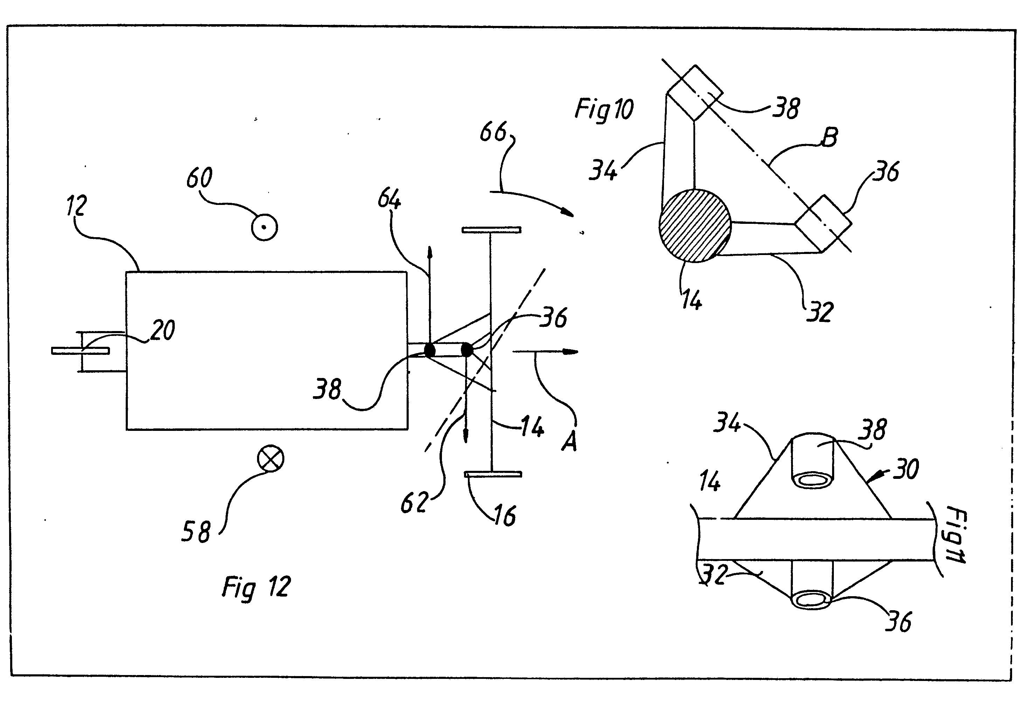

Neben den Darstellungen in Fig. 1 - 6 ist besonders deutlich in den Fig. 7, 8 und 9 zu erkennen, daß die Doppellenkachse 14 mittig mit einem Lenkkopf 30 fest verbunden ist, welcher gemäß Fig. 7 und 8 durch 2 etwa dreieckförmige Teile gebildet ist. In der Seitenansicht gemäß Fig. 3 sowie in Fig. 10 und 11 ist der Lenkkopf 30 jeweils durch zwei fest mit der Vorderachse verbundene Haltelaschen 32 und 34 gebildet.

Der Lenkkopf 30 trägt an seinen der Vorderachse abgewandten Enden eine obere Buchse 36 sowie eine untere Buchse 38. Die beiden Buchsen sind miteinander fluchtend ausgerichtet, und zwar längs einer schräg zur Fahrtrichtung A verlaufenden Fluchtlinie B. Die Fahrtrichtung A und die Fluchtlinie B schließen einen Winkel $\alpha$ ein, welcher kleiner als 90°, vorzugsweise 45°, ist.

An dem Tragrahmen 26 bzw. an der Tragschiene 28 befindet sich vorne eine Hülse 40, die ebenfalls entsprechend der Fluchtlinie B geneigt verläuft. Die Hülse 40 wird zwischen den beiden im Abstand voneinander befindlichen Buchsen 36 und 38 angeordnet, und sowohl durch die Buchsen 36 und 38 als auch durch die Hülse 40 ist ein Achslenkzapfen 42 geführt, welcher oben einen Zapfenkopf 44 besitzt.

Durch die beschriebene Anordnung wird also mittels des Achslenkzapfens 42, der beiden Buchsen 36 und 38 und mittels der Hülse 40 eine scharnierartige Verbindung zwischen der Trittfläche 12 und der Vorderachse 14 hergestellt. Die Besonderheit dieser Verbindung ist in der schrägen Anordnung - bezogen auf die Fahrtrichtung A - zu sehen, welche eine Lenkung der Doppellenkachse 14 gestattet, und zwar durch Gewichtsverlagerung einer auf der Trittfläche 12 stehenden Person, wobei die Gewichtsverlagerung die Trittfläche 12 aus ihrer waagerechten Ruhelage in eine Schrägstellung bringt.

Das Prinzip der Lenkung des Rollsurfers 10 basiert auf einer Kraftübertragung mittels der Hülse 40 und des Achslenkzapfens 42 auf die beiden im Abstand voneinander angeordneten Buchsen 36 und 38. Dabei wird die Kraftübertragung durch eine Schrägstellung der Trittfläche 12 hervorgerufen.

In der Prinzipdarstellung in Fig. 12 sind die beiden Buchsen 36 und 38 zu erkennen, die in der Draufsicht infolge der schrägen Anordnung einen Abstand voneinander aufweisen.

Es sei angenommen, daß die Trittfläche 12 aus ihrer waagerechten Lage heraus in eine Schrägstellung gebracht wird, wobei durch das Pfeilende 58 an der rechten Seite der Trittfläche 12 angedeutet ist, daß diese Seite nach unten - also auf den Erdboden zu - bewegt wird, wobei sich die gegenüberliegende linke Seite der Trittfläche 12 von dem Erdboden entfernt, wie die Pfeilspitze 60 verdeutlichen soll.

Über die Hülse 40 und den Achslenkzapfen 42 wird die Kippbewegung der Trittfläche 12 auf die beiden Hülsen 36 und 38 übertragen, wobei an der oberen Hülse 36 eine nach rechts gerichtete Kraft 62 und an der unteren Hülse 38 eine nach links gerichtete Kraft 64 angreift. Da die beiden Kraftangriffspunkte - also die Hülsen 36 und 38 - einen Abstand voneinander besitzen, bewirken die beiden Kräfte 62 und 64 in ansich bekannter Weise ein Drehmoment, welches mittels des Lenkkopfes 30 auf die Vorderachse 14 übertragen wird und eine Auslenkung nach rechts (vgl. den Pfeil 66) hervorruft.

Wenn daher eine auf der Trittfläche 12 stehende Bedienungsperson ihr Gewicht nach rechts verlagert und dadurch die Trittfläche 12 in eine entsprechende Schrägstellung bringt, lenkt der Rollsurfer 10 nach rechts aus.

Entsprechend kann man durch eine Gewichtsverlagerung auf die linke Seite der Trittfläche 12 eine Linkskurve beschreiben. Das Maß der Richtungsänderung hängt dabei von der jeweiligen Schrägstellung der Trittfläche 12 ab. Je schräger die Trittfläche 12 geneigt ist, umso größer wird die Richtungsänderung.

Die obige Schilderung verdeutlicht, daß die Abhängigkeit der Lenkung von der Schrägstellung der Trittfläche 12 auch von der Neigung der Fluchtlinie B abhängt. Je weiter in der Draufsicht gemäß Fig. 12 die beiden Buchsen 36 und 38 voneinander entfernt sind, umso größer wird das jeweilige Drehmoment und damit der Lenkausschlag.

Es hat sich als vorteilhaft erwiesen, zwischen der Vorderachse 14 und der Trittfläche 12 Dämpfungsglieder vorzusehen, welche einer Bewegung der Trittfläche 12 aus der waagerechten Rugelage heraus einen gewissen Widerstand entgegensetzen und damit eine sichere Bedienung der Lenkung fördern. Zweckmäßigerweise werden zu beiden Seiten des Lenkkopfes 30 je ein Lenkungsdämpfer 46 und 48 angeordnet, die über Gelenkverbindungen 50 mit der Vorderachse 14 und über Gelenkverbindungen 52 mit dem Tragrahmen 26 bzw. der Trittfläche 12 verbunden sind.

Ohne die Lenkungsdämpfer 46, 48, für die übrigens normale Stoßdämpfer verwendet werden können, würde jede geringfügige Gewichtsverlagerung einer Bedienungsperson auf der Trittfläche 12 sofort eine Lenkung hervorrufen, während durch die Lenkungsdämpfer 46 und 48 bei einer gewünschten Richtungsänderung erst ein gewisser Widerstand überwunden werden muß.

In praktischen Versuchen mit dem Rollsurfer 10 hat sich die hervorragende Lenkungseigenschaft bestens bestätigt. Dabei ist auch festgestellt worden, daß sich mit dem Rollsurfer 10 bei günstigen Windverhältnissen beachtliche Geschwindigkeiten erzielen lassen. Aus Sicherheitsgründen ist deshalb schon in den Fig. 1 und 2 ein Bremshebel 24 zum Bremsen vorgesehen.

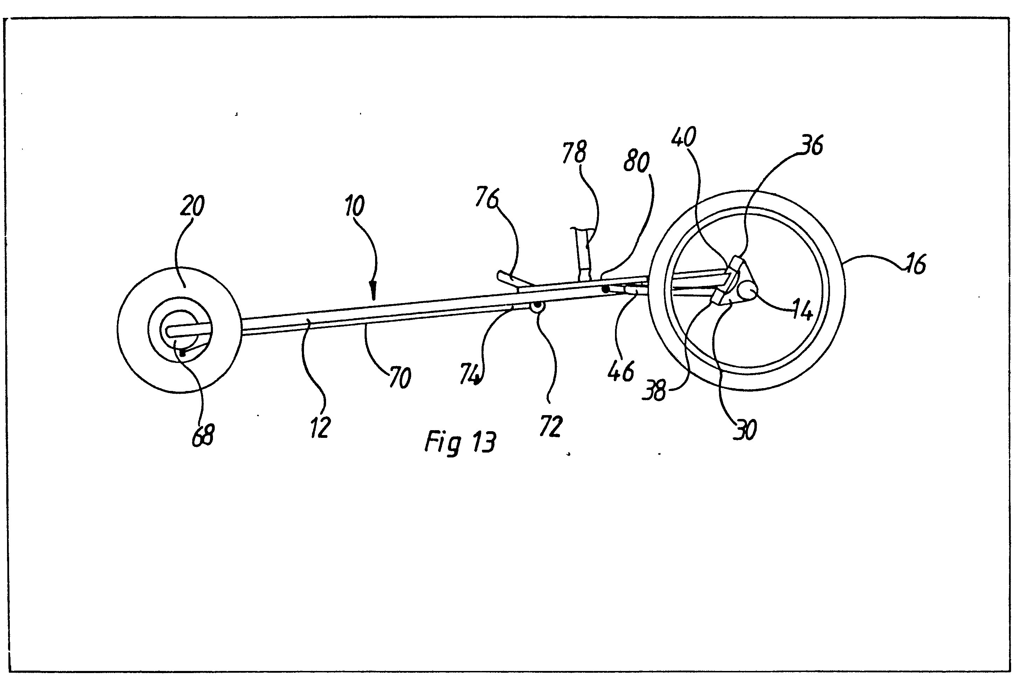

Eine verbesserte Ausführungsform einer Bremsvorrichtung für den Rollsurfer 10 ist in Fig. 13 dargestellt. Dort ist übrigens auf einer Mastschiene 80 teilweise ein Mast 78 gezeigt.

Die Bremsvorrichtung umfaßt ein Bremspedal 76 welches mit einem Bremsseil 70 verbunden ist. Letzteres ist um einen Bremsdrehpunkt 72 geführt und in einer Bremsseilhalterung 74 gehalten. Bei Betätigung des Bremspedals 76 wirkt das Bremsseil auf eine Bremstrommel 68, die sich am Hinterrad 20 befindet.

Die beschriebene Bremsvorrichtung - und hier vor allem die örtliche Anordnung des Bremspedals 76 in der Nähe des Mastes 78 - ist deshalb besonders vorteilhaft, weil das Bremspedal 76 von einem Benutzer, der ja bekanntlich in der Nähe des Mastes 78 steht, leicht bedient werden kann.

Es ist übrigens auch möglich, eine automatische Bremse vorzusehen, die selbsttätig wirksam wird, wenn der Rollsurfer 10 eine vorbestimmte Geschwindigkeit überschreitet.

Je nach Beschaffenheit des Geländes lassen sich bei dem Rollsurfer unterschiedliche Vorderräder 16 und Hinterräder 20 verwenden. In den Fig. 1 und 2 sind die Räder relativ breit ausgebildet, während in den anderen Ausführungsbeispielen des Rollsurfers 10 schmale Räder zugrunde gelegt sind.

Der erfindungsgemäße Rollsurfer kann ohne weiteres auch auf Schnee oder auf Eis verwendet werden. In diesen Anwendungsfällen lassen sich die Räder durch Skier oder nach Art von Schlittschuhen durch Kufen ersetzen. Der neuartige Lenkmechanismus wird in jedem Fall auch bei diesen Abwandlungen wirksam.

**Patentansprüche**

1. Mit Windenergie durch Segel antreibbares Fahrgerät mit einer Trittfläche, welche mit Bewegungsmitteln wie Räder oder dergleichen verbunden ist, wobei zwei Bewegungsmittel an einer Doppellenkachse angebracht sind, und wobei die Trittfläche mittels einer Lenkvorrichtung mit der Doppellenkachse verbunden und aus ihrer waagerechten Lage heraus in eine Schrägstellung bringbar ist, wodurch die Doppellenkachse aus ihrer Ruhelage ausgelenkt wird, dadurch gekennzeichnet, daß die Lenkvorrichtung einen Lenkkopf (30) für zwei Bewegungsmittel umfaßt, welcher in der Mitte an der Doppellenkachse (14) befestigt ist, daß der Lenkkopf (30) zwei im Abstand voneinander befindliche Buchsen (36, 38) besitzt, die längs einer schräg zur Fahrtrichtung (A) verlaufenden Fluchtlinie (B) von unten/hinten nach oben/vorne miteinander fluchtend ausgerichtet sind, daß an dem Trittbrett (12) eine Hülse (40) befestigt ist, deren Mittelachse entsprechend der Fluchtlinie (B) schräg geneigt ist, daß die Hülse (40) und der Lenkkopf (30) mittels eines durch die Buchsen (36, 38) und die Hülse (40) geführten Achslenkzapfens (42) miteinander verbunden sind, wobei die Doppellenkachse (14) räumlich vor der Fluchtlinie (B) liegt, und daß die Doppellenkachse (14) zu beiden Seiten des Lenkkopfes (30) über je ein gelenkig (50, 52) angeordnetes Dämpfungsglied (46, 48) mit der Trittfläche (12) verbunden ist.

2. Fahrgerät nach Anspruch 1, <u>dadurch gekennzeichnet</u>, daß die Neigung der Fluchtlinie (B) bzw. des Achslenkzapfens (42) veränderbar ist.

3. Fahrgerät nach Anspruch 1, <u>dadurch gekennzeichnet</u>, daß das Fahrgerät (10) nach Art eines Surfbrettes ein Rigg für ein Segel besitzt.

4. Fahrgerät nach einem der Ansprüche 1 - 3, <u>dadurch gekennzeichnet</u>, daß die Bewegungsmittel Räder (16; 20) sind.

5. Fahrgerät nach einem der Ansprüche 1 - 3, <u>dadurch gekennzeichnet</u>, daß die Bewegungsmittel nach Art von Schlittschuhen als Kufen ausgebildet sind.

6. Fahrgerät nach einem der Ansprüche 1 - 3, <u>dadurch gekennzeichnet</u>, daß die Bewegungsmittel als Skier ausgebildet sind.

## Claims

1. Vehicle having a footboard capable of being driven by wind energy under sail, which footboard is connected with movement means such as wheels or the like, two movement means being mounted on a double steering axle and the footboard being connected by means of a steering device with the double steering axle and being capable of being brought out of its horizontal position into an inclined position, by which the double steering axle is deflected out of its at-rest position, characterized in that the steering device comprises a steering head (30) for two movement means which is fixed at the centre to the double steering axle (14), that the steering head (30) possesses two bushings (36, 38) disposed at a distance from each other, which are aligned with each other along a straight line (B) extending obliquely to the direction of travel (A) from below/behind to above/forward, that a sleeve (40) is fixed to the footboard (12), the central axis of which sleeve is inclined obliquely corresponding to the straight line (B), that the sleeve (40) and the steering head (30) are connected to one another by a steering journal (42) passing through the bushings (36, 38) and the sleeve (40), the double steering axle (14) lying spatially in front of the straight line (B), and in that the double steering axle (14) is connected with the footboard (12) on each side of the steering head (30) by a damping element (46, 48) mounted in articulated manner (50, 52).

2. Vehicle according to claim 1, characterized in that the inclination of the straight line (B) and of the steering journal (42) can be modified.

3. Vehicle according to claim 1, characterized in that the vehicle (10) possesses a rig for a sail in the manner of a wind-surfboard.

4. Vehicle according to one of claims 1 to 3, characterized in that the movement means are wheels (16; 20).

5. Vehicle according to one of claims 1 to 3, characterized in that the movement means are constructed as runners in the manner of sleigh runners.

6. Vehicle according to one of claims 1 to 3, characterized in that the movement means are constructed as skis.

## Revendications

1. Véhicule à marche-pied mu par l'énergie éolienne au moyen de voile, qui est relié à des moyens de locomotion, tels que des roues ou des moyens semblables, deux moyens de locomotion étant montés sur un essieu doublement orientable et le marche-pied étant relié à l'essieu doublement orientable par un organe de direction et pouvant passer de sa position horizontale à une position inclinée de manière à faire dévier l'essieu doublement orientable de sa position de repos, <u>caractérisé en ce</u> que l'organe de direction comprend une tête orientable (30) pour deux moyens de locomotion qui est fixée au milieu de l'essieu doublement orientable (14), en ce que la tête orientable (30) comprend deux paliers (36, 38), distant l'un de l'autre, et qui sont alignés, de bas en haut et de l'arrière vers l'avant, sur une ligne de pivotement (B) inclinée par rapport au sens de la marche (A), en ce que, sur le marche-pied (12), est fixé un tube (40) dont l'axe présente la même inclinaison que la ligne de pivotement (B), en ce que le tube (40) et la tête orientable (30) sont reliés ensemble au moyen d'un pivot de direction (42) passant dans les paliers (36, 38) et le tube (40), l'essieu doublement orientable (14) étant, dans l'espace, en avant de la ligne de pivot (B), et en ce que l'essieu doublement orientable (14) est, des deux côtés de la tête orientable (30), relié au marche-pied (12) par des amortisseurs (46, 48) articulés (en 50, 52).

2. Véhicule à marche-pied suivant la revendication 1, <u>caractérisé en ce</u> que l'inclinaison de la ligne de pivotement (B), c'est-à-dire du pivot de direction de l'essieu (42), est modifiable.

3. Véhicule à marche-pied suivant la revendication 1, <u>caractérisé en ce</u> que le moyen de locomotion (10) possède un gréement pour une voile, à la manière d'une planche à voile.

4. Véhicule à marche-pied suivant l'une quelconque des revendications 1 - 3, <u>caractérisé en ce</u> que les moyens de locomotion sont des roues (16, 20).

5. Véhicule à marche-pied suivant l'une quelconque des revendications 1 - 3, <u>caractérisé en ce</u> que les moyens de locomotion sont réalisés sous forme de patins, à la manière de patins à glace.

6. Véhicule à marche-pied suivant l'une quelconque des revendications 1 - 3, <u>caractérisé en ce</u> que les moyens de locomotion sont réalisés sous forme de skis.

30 36 48 10 12 24 22 20

A

16 38 B 26 28 18

*Fig. 1*

16 50 46 52 26 28 10 24 22

A

30 18

14

16 54 48 12 20

*Fig. 2*

EP 0 143 283 B1

Fig. 3

20

12

10

48

44

B

A

36

32

14

34

18

16

B

38

EP 0 143 283 B1

3

10

52

46

16

50

14

Fig. 4

26

30

56

A

20

36

18

26

50

12

52

48

16

Fig. 5

Fig. 6

Fig. 7

Fig. 8

Fig. 9

Fig 10

Fig 11

Fig 12

EP 0 143 283 B1

Fig 13